# DEMANDE DE BREVET EUROPEEN

(11) **EP 1 055 855 A1**
(43) Date de publication de la demande: **29.11.2000**
(21) Numéro de dépôt: 00401486.6
(22) Date de dépôt: 26.05.2000
(51) Int. Cl.: F16K 37/00, F16K 1/16, F16K 17/38

(54) **Dispositif de détection de la fermeture simultanée de deux organes mobiles et son application à un système coupe-feu à clapet**

(30) Priorité: 28.05.1999 FR 9906796
(71) Demandeur: Crouzet Automatismes, 26000 Valence (FR)
(72) Inventeur: Lascombe, Michel, 94117 Arcueil Cedex (FR); Minodier, Christian, 94117 Arcueil Cedex (FR)
(74) Mandataire: Guérin, Michel

(57) **Abrégé**

L'invention concerne un détecteur (7) d'une position déterminée atteinte simultanément par deux organes mobiles, notamment la fermeture complète de deux volets (31b, 32b) d'un clapet pour système coupe-feu. Le détecteur comprend un mini ou un microrupteur (8) muni d'un bouton poussoir (81) et deux poussoirs latéraux constitués par une tige (71, 72) dont des premières extrémités sont reliées par un levier transversal (90). Ce dernier appuie sur le bouton poussoir (81) par l'intermédiaire d'une vis de réglage (91). Des ressorts (75, 76), montés sur les tiges (71, 72) exercent des forces de répulsion de telle sorte qu'elles entraînent le levier (90) et que celui-ci enfonce le bouton poussoir (81). Les volets (31b, 32b) repoussent les tiges (71, 72) lorsqu'ils sont fermés. On prévoit deux butées (92, 93) limitant la course du levier (90). Pour que ce dernier relâche entièrement le bouton poussoir (81) et qu'il y ait détection de la fermeture des volets (31b, 32b), il est nécessaire que le levier (90) vienne en appui sur les deux butées (92, 93) à la fois.

## Description

L'invention concerne un dispositif de détection de la fermeture et/ou l'ouverture simultanée de deux organes.

Dans le cadre de l'invention, on doit entendre par "simultanée" le fait que les deux organes soient dans une même position spatiale en fin de course et non le fait qu'ils se déplacent en synchronisme parfait, pour passer d'une position à une autre.

L'invention s'applique plus particulièrement, mais non exclusivement, à un système coupe-feu du type à clapet comprenant deux volets mobiles autour d'un axe.

Pour fixer les idées, sans que cela soit limitatif en quoi que ce soit de la portée de l'invention, on se placera ci-après dans cette application préférée de l'invention.

Un tel système, qui peut être disposé à l'intérieur d'un tube, un tuyau ou de toutes sortes de conduits, comprend en général un clapet à deux volets indépendants, ouverts dans un état dit de repos. Le système comprend généralement un détecteur de chaleur ou de fumée qui actionne automatiquement un organe de commande de fermeture des volets.

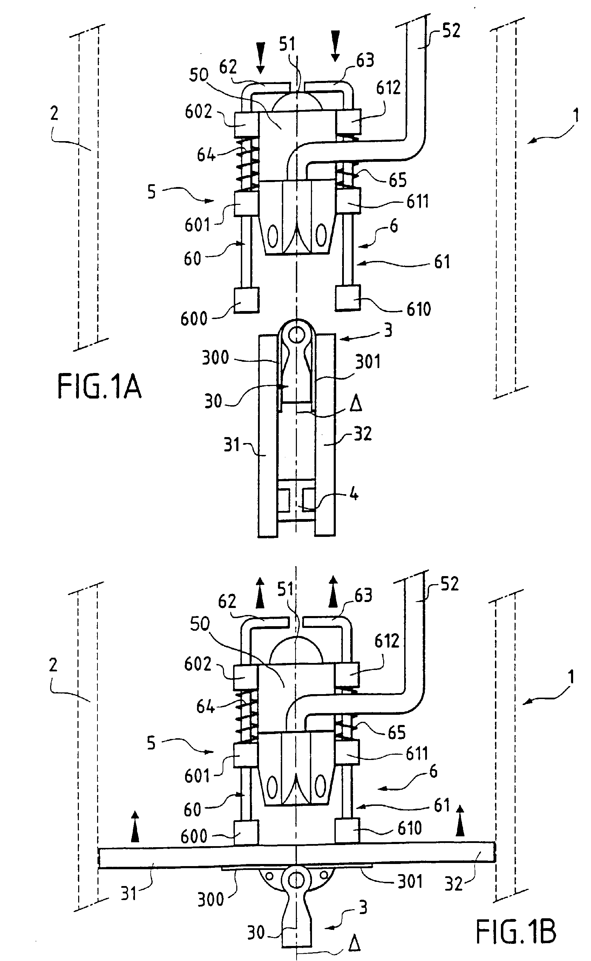

Les figures 1A et 1B, placées en fin de la présente description, illustrent schématiquement un exemple de système coupe-feu, selon l'art connu.

Sur la figure 1A, le système coupe-feu 1 a été représenté à l'état de repos ou état normal. Il est placé à l'intérieur d'un conduit 2, représenté en trait pointillés, la section de ce conduit pouvant être de forme et de dimensions quelconques. Le système coupe-feu comprend essentiellement un organe à clapet 3, muni de deux volets indépendants 31 et 32, disposés symétriquement par rapport à l'axe longitudinal Δ du conduit 2.

A l'état dit de repos, ou état normal, les volets, 31 et 32, doivent laisser libre passage au fluide circulant dans le conduit 2, habituellement de l'air. Pour ce faire, ils sont repliés l'un contre l'autre. Cependant, on prévoit un organe de commande 30, par exemple comprenant un ressort de type en épingle, d'axe orthogonal à l'axe Δ, qui, sur détection d'un état prédéterminé de feu (température dépassant un seuil prédéterminé) ou de fumée, va occasionner leur déploiement (figure 1B), c'est-à-dire la fermeture du conduit 2.

Pour qu'à l'état de repos les volets 31 et 32 restent repliés, sensiblement l'un contre l'autre, on prévoit généralement, si on doit détecter une augmentation anormale de température, un organe d'attache 4, inséré entre ces deux volets, constitué par un plomb fusible ou un organe similaire. Il est dévolu à cet organe 4 une double fonction. En effet, outre le fait qu'il retient les volets l'un contre l'autre, à l'état de repos, il détecte aussi une augmentation excessive de température : il est donc aussi utilisé comme détecteur de température. Dans ce cas précis, il fond et relâche les volets, 31 et 32, comme illustré plus particulièrement par la figure 1B. Ceux-ci sont alors entraînés par les branches, 300 et 301, du ressort en épingle de l'organe de commande 30, qui passe de l'état compressé à l'état détendu. Cette action occasionne le déploiement automatique des volets, 31 et 32, ce qui obstrue le conduit 2, le sépare en deux sections indépendantes (amont - aval) et bloque la propagation du feu.

Il est généralement nécessaire détecter le passage de l'état de repos ou ouvert (figure 1A) à un état dit de "travail" ou fermé (figure 1B), d'une part. D'autre part, il est nécessaire de s'assurer que les deux volets, 31 et 32, soient tous deux correctement fermés. Pour ce faire, on met généralement en oeuvre un détecteur 5 de la position fermée simultanée des volets 31 et 32. Dans l'exemple décrit, le détecteur 5, dont on n'a pas représenté les organes de fixation dans le conduit 2, comprend un interrupteur 50 muni d'un bouton poussoir 51. Des lames de contacts internes (non représentées) délivrent des signaux électriques véhiculées par des fils d'entrée-sortie 52, effectuant la liaison entre l'interrupteur 50 et des circuits externes électriques ou électroniques non représentés.

De part et d'autre de l'interrupteur 50, on prévoit un organe 6 à deux poussoirs mécaniques comprenant des tiges longitudinales, 60 et 61, sensiblement parallèles à l'axe Δ. Dans une zone que l'on appellera supérieure, 62 et 63, respectivement, ces tiges, 60 et 61, sont prolongées par deux parties, 62 et 63, coudées vers l'intérieur, sensiblement à 90 degrés. L'extrémité de ces parties recourbées recouvre le bouton poussoir 51.

On prévoit également des glissières, 602 et 612, respectivement, dans lesquelles sont enfilés et glissent les tiges longitudinales 60 et 61. Ces dernières sont munies d'une butée inférieure, 601 et 611, respectivement. Entre les butées inférieures, 601 et 611, et les glissières, 602 et 612, on dispose des ressorts de type boudin, 64 et 65, respectivement, coaxiaux aux tiges, 61 et 62. A l'état de repos, les ressorts, 64 et 65, repoussent les tiges 61 et 62 vers le bas, et donc également les coudes, 62 et 63. Il s'ensuit que ces derniers appuient sur le bouton poussoir 51, positionnant ainsi l'interrupteur 50 dans un premier état. L'état, par exemple fermé, des lames de contact peut être détecté via des fils de liaison qui relie le microrupteur à des circuits électriques ou électroniques externes (non représentés).

Le détecteur 5 et les volets, 31 et 32, sont disposés le long de l'axe Δ de sorte que, lorsqu'ils sont déployés, ils viennent en appui sur des extrémités, que l'on peut appeler inférieures, 600 et 610, respectivement, des tiges, 60 et 61, et les repoussent vers le haut. Il s'ensuit accessoirement que les ressorts, 64 et 65, sont compressés et, surtout, que les parties coudées, 62 et 63, sont également repoussées vers le haut, et de façon plus générale parallèlement à l'axe Δ. Le bouton poussoir 51 est alors relâché. Sous l'action d'un ressort interne (non représenté, ou des lames de contact elles-mêmes), qui repousse le bouton poussoir 51, l'interrupteur 50 est positionné dans un second état, qui se traduit (dans l'exemple décrit) par une coupure du circuit électrique des fils de liaison 52.

Il est nécessaire que la coupure du circuit électrique ne se réalise que si, et seulement si, les deux volets, 31 et 32, sont complètement déployés. Tant que l'un et/ou l'autre de ces deux volets, 31 et/ou 32, n'est pas entièrement déployé, l'interrupteur 50 doit rester dans le premier état et ne pas couper le circuit électrique (dans l'exemple décrit). Compte tenu des tolérances mécaniques, pour que le dispositif de détection 5 fonctionne correctement, de façon fiable, il est nécessaire de prévoir un bouton poussoir de grande dimension.

Il n'est donc pas possible, dans la pratique, d'utiliser des mini ou microrupteurs standards, munis de boutons poussoirs de faibles dimensions, ce qui exigerait un système de poussoirs de commande réalisé avec une très grande précision, et donc onéreux. Seule est envisageable une solution non standard, telle que celle évoquée ci-dessus, par exemple mettant en oeuvre des interrupteurs à bouton poussoir de grandes dimensions. Une telle solution est également onéreuse, puisqu'elle implique un développement spécifique.

L'invention vise à pallier les inconvénients des procédés et dispositifs de l'art connu, et dont certains viennent d'être rappelés.

L'invention se fixe pour but un dispositif de détection d'un état de fermeture simultanée de deux organes mobiles autorisant le recours à des minirupteurs, microrupteurs ou organes de commutation équivalents, de type standard.

De façon plus générale, le dispositif selon l'invention détecte un état de positionnement simultané prédéterminé de deux organes mobiles. Le détecteur selon l'invention peut en effet, par exemple, détecter un état d'ouverture simultanée de ces deux organes

Pour ce faire, on prévoit, comme dans l'art connu deux organes poussoirs de commande indépendants, actionnés par des ressorts. Cependant, ces deux organes poussoirs ne sont plus coudés, mais sont reliés par un levier unique appuyant sur le bouton poussoir, ou équivalent, du minirupteur, avantageusement via un organe intermédiaire, par exemple du type à vis. On prévoit également un jeu de butées, disposées de part et d'autre du microrupteur, par rapport à un axe longitudinal. Ces butées interdisent de relâcher suffisamment le bouton poussoir tant que les deux organes à surveiller, par exemple les deux volets d'un clapet de système coupe-feu, n'ont pas atteint tous deux un état prédéterminé.

L'invention a donc pour objet un dispositif de détection du positionnement simultané de deux organes mobiles dans des emplacements spatiaux prédéterminés, comportant un commutateur à deux états muni d'un organe d'actionnement commandant le passage réversible d'un desdits deux états à l'autre, caractérisé en ce qu'il comprend des moyens de commande mécaniques comprenant des première et seconde tiges susceptibles de se déplacer, par un mouvement translation longitudinal suivant deux axes parallèles, entre une première position et une seconde position, des moyens élastiques exerçant une force sur lesdites première et seconde tiges, de manière à les entraîner vers ladite première position, un levier reliant des premières extrémités desdites tiges et appuyant, dans une zone centrale, par une première face, sur ledit organe d'actionnement du commutateur électrique et l'entraînant dans le premier desdites deux états, et un jeu de deux butées fixes, disposées de part et d'autre de ladite zone centrale, en vis-à-vis d'une seconde face dudit levier et en relation spatiale déterminée avec celui-ci, de façon à limiter l'amplitude dudit mouvement de translation, en ce que les secondes extrémités desdites tiges sont disposées dans l'espace de manière à être entraînées en translation par lesdits premier et second organes, lorsque ceux-ci prennent lesdites positions spatiales prédéterminées, et à venir en contact contre lesdites butées, de manière à relâcher ledit organe d'actionnement, et en ce que ladite relation spatiale déterminée est telle qu'elle autorise un relâchement suffisant dudit organe d'actionnement pour que ledit commutateur passe audit second état, si et seulement si ledit levier vient en contact contre lesdites deux butées fixes, et insuffisant si ledit levier vient en contact avec une seule desdites butées fixes, de manière à détecter ledit positionnement simultané des deux organes dans les positions spatiales prédéterminées.

L'invention a encore pour objet l'application d'un tel dispositif pour la détection de la fermeture simultanée des volets d'un clapet d'un système coupe-feu.

L'invention va maintenant être décrite de façon plus détaillée en se référant aux dessins annexés, parmi lesquels :
- les figures 1A et 1B illustrent schématiquement un exemple de système coupe-feu selon l'art connu ; et
- la figure 2 illustre un exemple de réalisation d'un détecteur de la fermeture simultanée des deux volets d'un clapet d'un système coupe-feu, conforme à l'invention.

Dans ce qui suit, sans en limiter en quoi que ce soit la portée, on se placera ci-après dans le cadre de l'application préférée de l'invention, sauf mention contraire, c'est-à-dire dans le cas de la détection de la fermeture simultanée des volets d'un clapet d'un système coupe-feu, similaire à celui représenté sur les figures 1A et 1B.

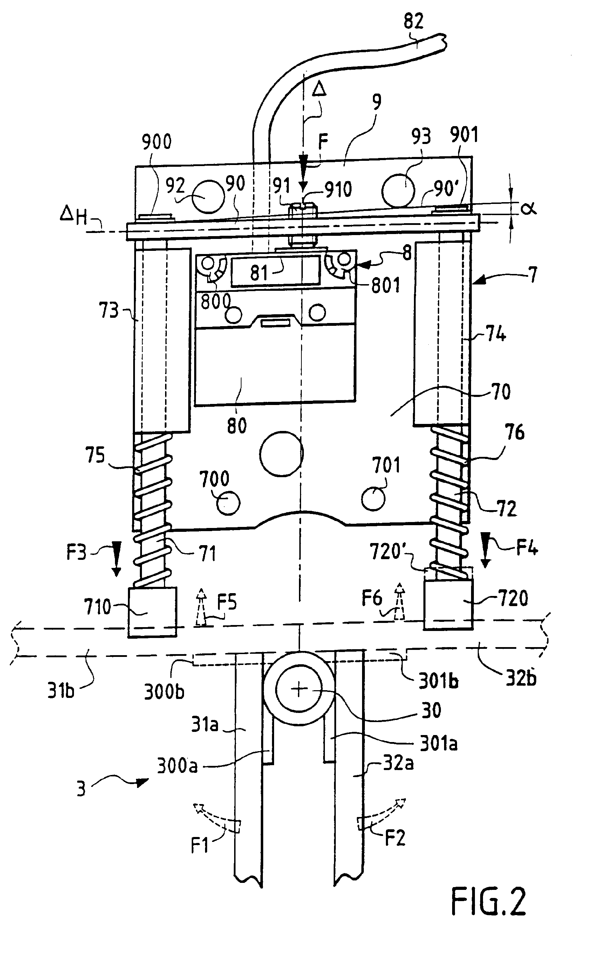

Sur la figure 2, on a représenté les volets du clapet du système coupe-feu repliés l'un contre l'autre (en trait fort), références 31a et 32b, et déployés (en traits pointillés), références 31b et 32b, c'est-à-dire le conduit fermé (figure 1 B : 2). Comme précédemment, les volets sont entraînés par un ressort de type en épingle ou un organe similaire, positions 300a-301a et 300b-301b, respectivement (forces *f*₁ et *f*₂, en traits pointillés)..

Le détecteur selon l'invention, désormais référencé 7, comprend une platine support 70 fixée dans le conduit 2 (figures 1A et 1B) par tous moyens classiques appropriés, via par exemple des orifices 700 et 701. Le corps 80 d'un interrupteur ou commutateur 8 est assujetti à la partie haute (dans l'exemple décrit sur la figure 2) de la platine 70, par exemple à l'aide d'organes de fixation, 800 et 801. Selon une première caractéristique de l'invention, il s'agit d'un microrupteur ou organe similaire, de type entièrement standard, muni d'un bouton poussoir 81 généralement de petites dimensions, tourné vers le haut de la platine 70, suivant une direction sensiblement parallèle à l'axe longitudinal Δ du conduit 2 (figures 1A et 1B).

On dispose sur les deux flancs de la platine 70, parallèlement à cette même direction, deux glissières, 73 et 74, dans lesquelles on introduit deux tiges rectilignes, 75 et 76. Les extrémités inférieures de celles-ci sont munies de butées, 710 et 720, respectivement. Entre les glissières, 73 et 76, on dispose deux ressorts de type boudin, 75 et 76, coaxiaux aux tiges 71 et 72. Les extrémités supérieures des tiges, 71 et 72, sont reliées, selon une autre caractéristique importante de l'invention, par un organe de couplage mécanique 9 comprenant un levier sensiblement horizontal 90. Cependant, les fixations d'extrémité, 900 et 901, respectivement, de ce levier 90, ne sont pas rigides, de sorte que, si les tiges 71 et 72 sont décalées en hauteur (parallèlement à l'axe Δ), le levier 90 puisse s'incliner par rapport à un axe Δ_{*H*}, (horizontal dans l'exemple de la figure 2) orthogonal à l'axe Δ.

Sous l'action de ces ressorts, 75 et 76, les tiges, 71 et 72, sont repoussées vers le bas, en une position dite de repos. Il s'ensuit que le levier 90, entraîné dans cette course, appuie sur le bouton poussoir 81 et reste bloqué dans cette position. Le microrupteur 8 se trouve donc, comme précédemment, dans un premier état, dit de travail, détectable via des fils de liaisons électriques 82 le reliant à des circuits électriques ou électroniques (non représentés). Chaque ressort, 75 ou 76, exerce une force de répulsion individuelle, *f*₃ et *f*₄ (en trait plein), sur l'extrémité de tige qui lui est associée, 710 ou 720, supérieure à la force propre de fin de course du microrupteur 8.

De façon plus précise, et dans un mode de réalisation préféré, l'appui du levier 90 (force *f*, en trait plein) sur le bouton poussoir 81 n'est pas direct, mais s'effectue via des organes de réglages 91, constitués par exemple par une vis traversant la paroi du levier 90 et comportant une fente d'entraînement en rotation de la vis 91.

En arrière du levier 90 (c'est-à-dire au-dessus dans l'exemple décrit), et selon une autre caractéristique importante de l'invention, on prévoit deux butées, 92 et 93, respectivement, disposées de part et d'autre de la vis de réglage 91, c'est-à-dire symétriquement par rapport à l'axe longitudinal Δ.

L'organe 91 permet donc de régler l'écart entre la face inférieure du levier 90 et le bouton poussoir 81, ainsi que l'écart existant entre la face supérieure du levier 90 et les butées fixes 92 et 93.

La position longitudinale de ces butées, 92 et 93, est telle que si, et seulement si, les deux tiges 71 et 72 sont repoussées vers le haut (forces *f*₅ et *f*₆, en traits pointillés), le levier 90 s'écarte suffisamment du microrupteur 8 de façon à ce que le bouton poussoir 81 soit relâché sous l'action de forces élastiques internes (ressort ou force élastique des lames contacts). Le microrupteur 8 se trouve alors dans un second état, également détectable via les fils de liaison 82. Dans cet état, le levier 90 vient en appui sur les deux butées 92 et 93. Il a donc effectué une translation suivant l'axe Δ, pour se retrouver parallèle à sa position de départ et à l'axe Δ_{*H*}.

Cet état est obtenu, de façon similaire à ce qui a été décrit en regard de la figure 1 B, lorsque les deux volets sont complètement déployés, positions 31 b et 32b sur la figure 2, c'est-à-dire le conduit 2 (figures 1A et 1b) fermé. Dans cette position, les volets, 31b et 32b, sont compris dans un plan, dans le prolongement l'un de l'autre. Ils exercent les forces *f*₅ et *f*₆ précitées qui repoussent les tiges, 71 et 72, vers le haut, accessoirement compressent les ressorts, 75 et 76, déplacent également vers le haut le levier 90, et libèrent enfin le bouton poussoir 81.

Par contre, si une seule tige, 71 ou 72, est repoussée vers le haut, c'est-à-dire si seulement l'un des volets est complètement déployé, le levier 90 va s'incliner par rapport à l'horizontal. Sur la figure 2, on a supposé (position représentée en traits pointillés) que seule la tige 72 était repoussée vers le haut. Son extrémité inférieure se déplace en 720'. Le levier prend la position 90', inclinée d'un angle α par rapport à l'axe Δ_{*H*}. L'amplitude de l'angle α est limitée par le fait que le levier vient en appui contre l'une des butées (position 90'), en l'occurrence la butée de droite 93. Le bas de la vis de réglage 91 va s'écarter du microrupteur 8, mais pas suffisamment pour que le bouton poussoir 81 soit entièrement relâché et que le microrupteur 8 passe au second état.

Il en aurait été de même si seule la tige 71 avait été repoussée vers le haut et que le levier 90 ait été incliné d'un angle -α, par rapport à l'axe Δ_{*H*}. Dans ce cas, il se serait trouvé en appui sur la butée de gauche 92.

On peut naturellement trouver toute une gamme de cas intermédiaires : tiges 71 et/ou 72 partiellement repoussées.

Comme il a été précédemment indiqué, il est nécessaire que les tiges, 71 et 72, soient toutes deux complètement repoussées pour que le microrupteur 8 passe du premier état au second.

La présence de l'organe de réglage 91, selon le mode de réalisation préféré, permet de compenser aisément les écarts de tolérances, *a priori* inévitables, et coopère avec le levier pour éviter la nécessité d'une fabrication d'éléments selon des côtes serrées.

A la lecture de ce qui précède, on constate aisément que l'invention atteint bien les buts qu'elle s'est fixés.

Elle permet d'assurer la détection d'un positionnement correct et simultané des deux volets, avec une grande fiabilité, sans nécessiter l'utilisation d'éléments spécifiques et une grande précision de fabrication de ces éléments.

Il doit être clair cependant que l'invention n'est pas limitée aux seuls exemples de réalisations explicitement décrits, notamment en relation avec la figure 2.

Le dispositif de détection selon l'invention a été représenté avec un axe de symétrie vertical. Il doit cependant être clair qu'il peut être disposé dans l'espace selon un axe quelconque.

Bien que le procédé ait été décrit de façon détaillée dans le cas de l'application préférée de l'invention, c'est-à-dire la détection de la fermeture simultanée des deux volets d'un clapet d'un système coupe-feu, comme il a été précédemment indiqué, l'invention n'est en aucun cas limitée à cette application particulière.

L'invention peut trouver application dans la détection de la fermeture, ou de l'état dual d'ouverture, de deux organes mobiles, voire de toute paire de positions spatiales prédéterminées, à la seule condition que, lorsque les organes ont atteint ces positions, ils appuient simultanément sur les deux poussoirs de commande actionnant le levier unique.

## Revendications

1. Dispositif de détection du positionnement simultané de deux organes mobiles dans des emplacements spatiaux prédéterminés, comportant un commutateur à deux états muni d'un organe d'actionnement commandant le passage réversible d'un desdits deux états à l'autre, caractérisé en ce qu'il comprend des moyens de commande mécaniques comprenant des première et seconde tiges (71, 72) susceptibles de se déplacer, par un mouvement translation longitudinal suivant deux axes parallèles, entre une première position et une seconde position, des moyens élastiques (75, 76) exerçant une force (*f*₃, *f*₄) sur lesdites première et seconde tiges (71, 72), de manière à les entraîner vers ladite première position, un levier (90) reliant des premières extrémités (900, 901) desdites tiges (71, 72) et appuyant (*f*), dans une zone centrale, par une première face, sur ledit organe d'actionnement (81) du commutateur électrique (8) et l'entraînant dans le premier desdites deux états, et un jeu de deux butées fixes (92, 93), disposées de part et d'autre de ladite zone centrale, en vis-à-vis d'une seconde face dudit levier (90) et en relation spatiale déterminée avec celui-ci, de façon à limiter l'amplitude dudit mouvement de translation, en ce que les secondes extrémités (710, 720) desdites tiges (71, 72) sont disposées dans l'espace de manière à être entraînées en translation par lesdits premier et second organes (31b, 32b), lorsque ceux-ci prennent lesdites positions spatiales prédéterminées, et à venir en contact contre lesdites butées (92, 93), de manière à relâcher ledit organe d'actionnement (81), et en ce que ladite relation spatiale déterminée est telle qu'elle autorise un relâchement suffisant dudit organe d'actionnement (81) pour que ledit commutateur (8) passe audit second état, si et seulement si ledit levier (90) vient en contact contre lesdites deux butées fixes (92, 93), et insuffisant si ledit levier (90') vient en contact avec une seule desdites butées fixes (93), de manière à détecter ledit positionnement simultané des deux organes (31 b, 32b) dans les positions spatiales prédéterminées.

2. Dispositif selon la revendication 1, caractérisé en ce que lesdits organes mobiles sont constitués par des volets (31a-31b, 32a-32b) en rotation autour d'un axe, lesdits volets pouvant prendre deux états extrêmes, un premier état (31a, 32a) dans lequel ils sont sensiblement repliés l'un contre l'autre, et un second état (31 b, 32b) dans lequel ils sont déployés, de manière à se trouver dans un plan, dans le prolongement l'un de l'autre, ledit second état étant associé au dit positionnement simultané à détecter dans un emplacement spatial prédéterminé.

3. Dispositif selon l'une des revendications 1 ou 2, caractérisé en ce que ledit commutateur électrique est un microrupteur ou un minirupteur (8) fixé sur une platine (70), en ce que ledit organe d'actionnement est un bouton poussoir (81), en position enfoncée dans ledit premier état, en ce que ladite platine (70) supporte lesdites butées fixes (92, 93) et comprend des glissières (73, 74) disposées de part et d'autre dudit commutateur (8), alignées sur lesdits axes de translation et dans lesquelles sont enfilées lesdites tiges (71, 72), en ce que lesdits moyens élastiques sont constitués par des ressorts du type boudin (75, 76), coaxiaux audites tiges (71, 72), et disposés entre des butées solidaires (710, 720) desdites secondes extrémités de tiges (71, 72) et lesdites glissières (73, 74).

4. Dispositif selon la revendication 3, caractérisé en ce que ledit commutateur électrique (8) comprenant des moyens élastiques internes exerçant une force de répulsion sur ledit bouton poussoir (81), chacun desdits ressorts de type boudin (75, 76), exerce une force (*f*₃, *f*₄) sur ladite butée d'extrémité (710, 720) de tige (71, 72) qui lui est associée supérieure à cette force de répulsion, de manière à ce que ledit bouton poussoir (81) reste enfoncé si l'une seulement desdites tiges (71, 72) est entraînée par ledit organe mobile (31 b, 32b) qui lui est associé.

5. Dispositif selon la revendication 3, caractérisé en ce que ledit levier appuie sur ledit bouton poussoir (81) par l'intermédiaire d'une vis de réglage (91), de manière à ajuster la distance séparant ledit bouton poussoir (81) dudit levier (90) et à définir ladite relation spatiale déterminée existant entre lesdites butées (92, 93) et ladite seconde face du levier (90).

6. Application à un système coupe-feu placé dans un conduit, du type comprenant un clapet de fermeture dudit conduit à deux volets prenant une position repliée l'un contre l'autre dans un premier état, et une position déployée sur détection de la présence de fumée ou d'une température dépassant un seuil prédéterminé dans ledit conduit, de façon séparer de façon étanche ledit conduit en deux sections, caractérisé en ce que ledit système coupe-feu comprend un dispositif (7) de détection du positionnement simultané de deux organes mobiles dans des emplacements spatiaux prédéterminés selon l'une quelconque des revendications 1 à 5, lesdits deux organes mobiles étant constitués par lesdits deux volets (31 b, 32b) et lesdits emplacements prédéterminés étant définis par les positions atteintes lorsque lesdits volets (31b, 32b) sont complètement déployés.

7. Application selon la revendication 6, caractérisé en ce que ledit système comprenant un détecteur de dépassement d'un seuil de température prédéterminé, il est prévu un organe (30) d'actionnement desdits volets comprenant un ressort du type en épingle (300a-300a, 301a-301a), exerçant une force (*f*₅, *f*₆) sur lesdits deux volets tendant à les faire passer dudit premier état replié (31 a, 32a) audit second état déployé (31b, 32b), et en ce que ledit détecteur de dépassement de seuil de température est un organe fusible (4) retenant lesdits volets repliés (31a, 32a) tant que ledit seuil de température n'est pas atteint, le point de fusion étant réglé pour obtenir un déclenchement à ce seuil de température occasionnant ledit déploiement des volets (31 b, 32b).
